# FASCICULE DE BREVET EUROPEEN

(11) **EP 3 008 745 B1**
(45) Date de publication et mention de la délivrance du brevet: **05.04.2017**
(21) Numéro de dépôt: 14734874.2
(22) Date de dépôt: 06.06.2014
(51) Int. Cl.: H01H 47/04, H02J 1/00, H02J 3/00

(54) **DISPOSITIF ET PROCÉDÉ D'ASSISTANCE D'UN SYSTÈME DE GÉNÉRATION ÉLECTRIQUE D'UN AÉRONEF**
UNTERSTÜTZUNGSVORRICHTUNG UND -VERFAHREN FÜR EIN ENERGIEERZEUGUNGSSYSTEM EINES FLUGZEUGS
ASSISTANCE DEVICE AND METHOD FOR A POWER GENERATION SYSTEM OF AN AIRCRAFT

(30) Priorité: 10.06.2013 FR 1355347
(43) Date de publication de la demande: 20.04.2016
(73) Titulaire: Safran Electrical & Power, 31702 Blagnac Cedex (FR)
(72) Inventeur: HENRARD, Pierre, F-31220 Cazeres (FR); CARRE, Nicolas, F-31100 Toulouse (FR); CHAPOTIN, Bruno, F-31100 Toulouse (FR)
(74) Mandataire: Gevers & Orès
(86) Numéro de dépôt international: PCT/FR2014/051371
(87) Numéro de publication internationale: WO 2014/199056

(56) Documents cités:
- EP-A1- 1 220 409
- EP-A2- 2 482 445
- WO-A1-2011/095223
- WO-A1-2012/069869
- DE-A1- 4 024 496
- "REDUCING RELAY POWER CONSUMPTION", ELEKTOR, CANTERBURY, GB, vol. 29, no. 327, 1 décembre 2003 (2003-12-01), page 42, XP001177540, ISSN: 0268-4519

## Description

### 1. Domaine technique de l'invention

L'invention concerne un dispositif d'assistance d'un système de génération électrique d'un aéronef. L'invention concerne également un système comprenant un tel dispositif d'assistance, ainsi qu'un procédé d'assistance d'un système de génération électrique d'un aéronef.

### 2. Arrière-plan technologique

L'architecture électrique d'un aéronef se compose de manière connue d'une architecture de distribution électrique et d'un système de génération électrique. Chaque type d'aéronef dispose généralement d'une architecture de distribution spécifique adaptée à ses besoins. Le système de génération électrique est quant à lui plus standard et peut être adapté à plusieurs types d'aéronef. Ce système de génération électrique déjà éprouvé et qualifié pour l'aéronautique permet à l'avionneur, lorsqu'il est réutilisé, de réaliser des économies conséquentes lors du développement d'un nouvel aéronef. De façon connue, un système de génération électrique comprend un générateur, un régulateur et un contacteur comprenant des contacts et une commande d'ouverture/fermeture des contacts, piloté par ledit régulateur et agencé entre le générateur et une architecture de distribution. Un tel système de génération électrique est par exemple présenté dans la demande de brevet EP2482445. Cependant, certains de ces éléments du système de génération électrique peuvent ne pas être compatibles avec les nouvelles générations d'équipement électrique, notamment avec le contacteur : en effet, les courants d'appel des contacteurs de nouvelle génération (contacteurs à économie d'énergie), ne sont pas compatibles avec les capacités en courant des régulateurs plus anciens. De plus, certains de ces éléments peuvent ne pas être conformes aux nouvelles normes ou à des changements de niveaux d'exigences (tel que le niveau d'assurance de développement DAL) requis pour l'utilisation dans un aéronef.

### 3. Objectifs de l'invention

L'invention vise à pallier au moins certains des inconvénients des systèmes de génération électrique connus.

En particulier, l'invention vise à fournir, dans au moins un mode de réalisation de l'invention, un dispositif d'assistance d'un système de génération électrique d'un aéronef qui rende le système compatible avec les nouvelles générations d'équipement électrique, notamment les contacteurs à économie d'énergie.

L'invention vise aussi à fournir, dans au moins un mode de réalisation, un dispositif d'assistance d'un système de génération électrique existant déjà qualifié pour un usage aéronautique, sans en modifier le fonctionnement mais en l'agrémentant de nouvelles spécifications.

L'invention vise aussi à fournir, dans au moins un mode de réalisation, un dispositif d'assistance qui agit comme protection contre les dysfonctionnements électriques du générateur tel que surtensions ou sur-fréquences.

L'invention vise aussi à fournir un système de génération électrique assisté par un dispositif d'assistance selon l'invention.

L'invention vise aussi à fournir, dans au moins un mode de réalisation, un procédé d'assistance d'un système de génération électrique.

L'invention vise aussi à fournir, dans au moins un mode de réalisation, un procédé d'assistance d'un système de génération électrique d'un aéronef par un dispositif d'assistance permettant de pallier des pannes de fonctionnement du système.

### 4. Exposé de l'invention

Pour ce faire, l'invention concerne un dispositif d'assistance d'un système de génération électrique d'un aéronef, ledit système comprenant un générateur, un régulateur et un contacteur comprenant des contacts et une commande d'ouverture/fermeture des contacts, piloté par ledit régulateur et agencé entre le générateur et une architecture de distribution, le dispositif d'assistance étant caractérisé en ce qu'il est connecté à au moins une source d'alimentation distincte du générateur et du régulateur, et en ce qu'il comprend des moyens de fermeture du contacteur adapté pour connecter la source d'alimentation à la commande du contacteur afin de fournir le courant nécessaire à la fermeture dudit contacteur.

Le dispositif d'assistance est donc adapté pour être alimenté par la source d'alimentation distincte du générateur et du régulateur.

On entend par contacteur tout organe électrique permettant la commutation de liaison électrique par le biais d'une commande, la liaison électrique se faisant par des contacts prévus pour supporter la charge de courant entre le générateur et l'architecture de distribution.

Un dispositif d'assistance selon l'invention permet donc d'assurer la fermeture du contacteur sans modifier les organes de génération existants, grâce à la fourniture de courant par ladite source d'alimentation. En particulier, le régulateur conserve le contrôle sur l'ouverture et la fermeture du contacteur. Le dispositif d'assistance permet de fournir le courant nécessaire à la fermeture d'un contacteur de nouvelle génération, ce qu'un régulateur qualifié pour les systèmes existants ne permet pas nécessairement. Un dispositif d'assistance selon l'invention permet donc d'adapter les systèmes existants aux nouveaux équipements électriques.

Avantageusement et selon l'invention, les moyens de fermeture du contacteur comprennent un premier relais électrique comprenant des contacts et une commande d'ouverture/fermeture des contacts, lesdits contacts étant adaptés pour relier le régulateur à la commande du contacteur et la commande dudit relais étant reliée à la source d'alimentation.

On entend par relais tout organe électrique permettant la commutation de liaison électrique par le biais d'une commande (par exemple une bobine), la liaison électrique se faisant par des contacts, comme par exemple un relais électromécanique, un relais statique ou tout autre commutateur commandé.

Selon cet aspect de l'invention, le dispositif d'assistance peut déconnecter le régulateur et la commande du contacteur pour ne pas surcharger en courant le régulateur lors de la fermeture du contacteur, ou bien les connecter pour que le régulateur puisse commander le contacteur.

Avantageusement et selon l'invention, les moyens de fermeture du contacteur comprennent un relais électrique, dit second relais, comprenant des contacts et une commande d'ouverture/fermeture des contacts, lesdits contacts étant adaptés pour relier la source d'alimentation à la commande du contacteur et la commande dudit second relais étant reliée au régulateur.

Selon cet aspect de l'invention, le régulateur peut connecter la source d'alimentation et la commande du contacteur pour que la source d'alimentation fournisse le courant nécessaire à la fermeture du contacteur, ou bien les déconnecter pour que le dispositif d'assistance ne perturbe pas la liaison entre le régulateur et la commande du contacteur.

Avantageusement et selon l'invention, le premier relais est un relais normalement fermé et le second relais est un relais normalement ouvert.

On entend par relais normalement fermé un relais qui est en position fermée lorsque sa commande n'est pas alimentée. De façon analogue, on entend par relais normalement ouvert un relais qui est en position ouverte lorsque sa commande n'est pas alimentée.

Selon cet aspect de l'invention, en cas de dysfonctionnement du dispositif d'assistance, la source d'alimentation de celui-ci est déconnectée de la commande du relais et le régulateur reste connecté à la commande du relais et peut ouvrir ledit relais si nécessaire.

Avantageusement et selon l'invention, le dispositif d'assistance comprend des moyens de mesure de la tension et de la fréquence à proximité d'un point de régulation agencé entre le générateur et le contacteur. On entend par point de régulation le point où le régulateur mesure la tension du générateur.

Selon cet aspect de l'invention, le dispositif d'assistance peut mesurer des tensions et fréquences, et ainsi jouer un rôle de protection contre les dysfonctionnements électriques tels que surtensions et sur-fréquences du générateur électrique. Les systèmes de génération électrique connus disposent généralement d'une protection contre les surtensions au niveau du régulateur : le dispositif d'assistance joue alors ici le rôle d'une protection supplémentaire.

Avantageusement et selon l'invention, les moyens de mesures sont adaptés pour mesurer les tensions sur trois phases du générateur.

Selon cet aspect de l'invention, le dispositif d'assistance peut détecter tout dysfonctionnement électrique du générateur.

Avantageusement et selon l'invention, le dispositif d'assistance comprend au moins une carte électronique.

Selon cet aspect de l'invention, la carte électronique reçoit les diverses connexions du dispositif.

Avantageusement et selon l'invention, la carte électronique comprend au moins un circuit logique.

Selon cet aspect de l'invention, le circuit logique traite les mesures de tensions apportées par les moyens de mesures, envoie les signaux de déconnexion au générateur et reçoit des signaux de statuts de différents éléments du système.

L'invention concerne également un système de génération électrique d'un aéronef comprenant un générateur, un régulateur et un contacteur comprenant des contacts et une commande d'ouverture/fermeture des contacts, piloté par ledit régulateur et agencé entre le générateur et une architecture de distribution, caractérisé en ce qu'il est assisté par un dispositif d'assistance selon l'invention.

L'invention concerne également un procédé d'assistance d'un système de génération électrique d'un aéronef comprenant un générateur, un régulateur et un contacteur comprenant des contacts et une commande d'ouverture/fermeture des contacts, piloté par ledit régulateur et agencé entre le générateur et une architecture de distribution, caractérisé en ce qu'il comprend une étape de connexion de la commande du contacteur à une source d'alimentation distincte du générateur et du régulateur afin de fournir le courant nécessaire à la fermeture dudit contacteur.

Un procédé selon l'invention permet donc d'assurer la fermeture du contacteur grâce au courant fourni par la source d'alimentation du dispositif d'assistance.

Avantageusement et selon l'invention, le procédé comprend une étape de connexion du régulateur à la commande du contacteur.

Selon cet aspect de l'invention, le procédé permet au régulateur de piloter la commande du contacteur pour maintenir le contacteur fermé grâce au courant délivré par le régulateur, ou pour ouvrir le contacteur.

Avantageusement et selon l'invention, le procédé comprend successivement les étapes suivantes :
- une étape de déconnexion du régulateur et de la commande du contacteur ;
- ladite étape de connexion de la commande du contacteur à la source d'alimentation, afin de provoquer la fermeture dudit contacteur ;
- une étape de connexion du régulateur à la commande du contacteur, afin de maintenir fermé le contacteur ;
- une étape de déconnexion de la commande du contacteur à la source d'alimentation.

Selon cet aspect de l'invention, pour fermer le contacteur, le régulateur est déconnecté de la commande du contacteur, puis la source d'alimentation est connectée à la commande du contacteur afin de fournir le courant électrique nécessaire à sa fermeture, puis le régulateur est connecté à la commande du contacteur, afin de maintenir fermé le contacteur, et enfin la source d'alimentation est déconnectée de la commande du contacteur pour laisser le régulateur piloter le contacteur. C'est le déroulement normal du procédé.

Avantageusement et selon l'invention, le procédé d'assistance contient une étape de gestion de panne avec l'envoi d'un signal de déconnexion au générateur, ladite étape étant exécutée quand le régulateur et la commande du contacteur ne sont pas déconnectés suite à l'étape de déconnexion du régulateur à la commande du contacteur, ou quand la commande du contacteur et la source d'alimentation ne sont pas déconnectés suite à l'étape de déconnexion de la commande du contacteur à la source d'alimentation.

Selon cet aspect de l'invention, le procédé prend en compte les possibilités que les déconnexions ne soient pas effectuées comme prévu. Si le régulateur et la commande du contacteur ne sont pas déconnectés, le déroulement normal du procédé ne peut pas se faire. Si la commande du contacteur et la source d'alimentation ne sont pas déconnectées, le régulateur ne peut plus ouvrir le contacteur. Dans ces deux cas, le générateur est donc déconnecté afin d'éviter une panne dormante du système de génération électrique. On entend par panne dormante une panne qui n'est pas détectée en fonctionnement normal et qui est détectée seulement lorsque la fonction en panne doit être exécutée. En d'autres termes, il s'agit d'une panne qui n'est pas détectée préalablement à la tentative d'exécution de la fonction en panne.

Avantageusement et selon l'invention, le procédé d'assistance contient une étape de gestion de panne sans envoi de signal de déconnexion au générateur, ladite étape étant exécutée quand le régulateur et la commande du contacteur sont déconnectés avant l'étape de déconnexion du régulateur à la commande du contacteur, quand la commande du contacteur et la source d'alimentation ne sont pas connectés suite à l'étape de connexion de la commande du contacteur à la source d'alimentation, ou quand le contacteur ne se ferme pas à la suite de l'étape de connexion de la commande du contacteur à la source d'alimentation.

Selon cet aspect de l'invention, le procédé prend en compte les possibilités que les connexions ne soient pas effectuées comme prévu, ou que le contacteur ne se ferme pas malgré la connexion de la source d'alimentation à la commande du contacteur. Dans ces différents cas, le contacteur est ouvert, le générateur n'est donc pas connecté à l'architecture d'alimentation et il n'y a donc pas d'envoi de signal de déconnexion au générateur nécessaire.

Avantageusement et selon l'invention, l'étape de gestion de panne sans envoi de signal de déconnexion au générateur se déclenche après une temporisation prédéterminée quand le contacteur ne se ferme pas à la suite de l'étape de connexion de la commande du contacteur à la source d'alimentation.

Selon cet aspect de l'invention, le procédé d'assistance attend une confirmation de la fermeture du contacteur pendant une durée prédéterminée, et si cette durée est dépassée, considère que la tentative de fermeture a échoué et déclenche une étape de gestion de panne sans envoi de signal de déconnexion au générateur.

Avantageusement et selon l'invention, le procédé d'assistance contient une étape de gestion de dysfonctionnement électrique durant laquelle la commande du contacteur est déconnectée du régulateur et de la source d'alimentation, ladite étape étant exécutée si le procédé d'assistance détecte un dysfonctionnement électrique grâce à des mesures de tensions sur un point de régulation situé entre le générateur et le contacteur.

Selon cet aspect de l'invention, le procédé agit comme protection contre les dysfonctionnements électriques en déconnectant la commande du contacteur, à la fois de la source d'alimentation et du régulateur, ce qui entraine l'ouverture du contacteur et donc la déconnexion du générateur et de l'architecture de distribution.

Avantageusement, le dispositif d'assistance selon l'invention met en oeuvre le procédé d'assistance selon l'invention.

Avantageusement, le procédé d'assistance selon l'invention est mis en oeuvre par le dispositif d'assistance selon l'invention.

L'invention concerne également un dispositif d'assistance, un système de génération électrique, un procédé d'assistance, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une architecture électrique d'un aéronef comportant un dispositif d'assistance selon un mode de réalisation de l'invention,
- la figure 2 est une vue schématique du dispositif d'assistance selon un mode de réalisation de l'invention.

### 6. Description détaillée d'un mode de réalisation de l'invention

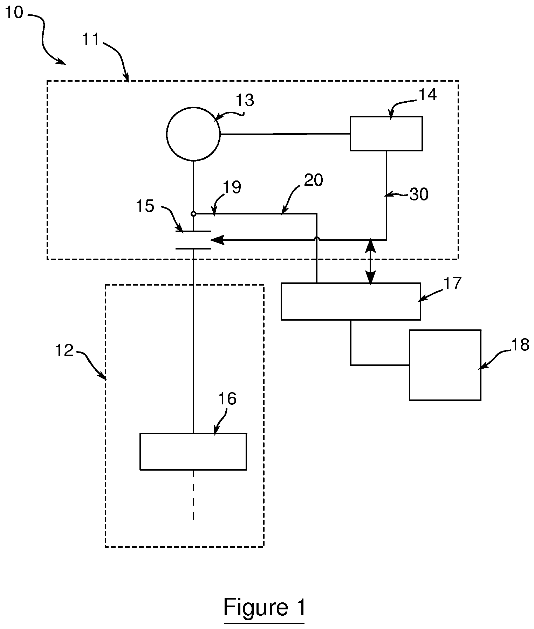

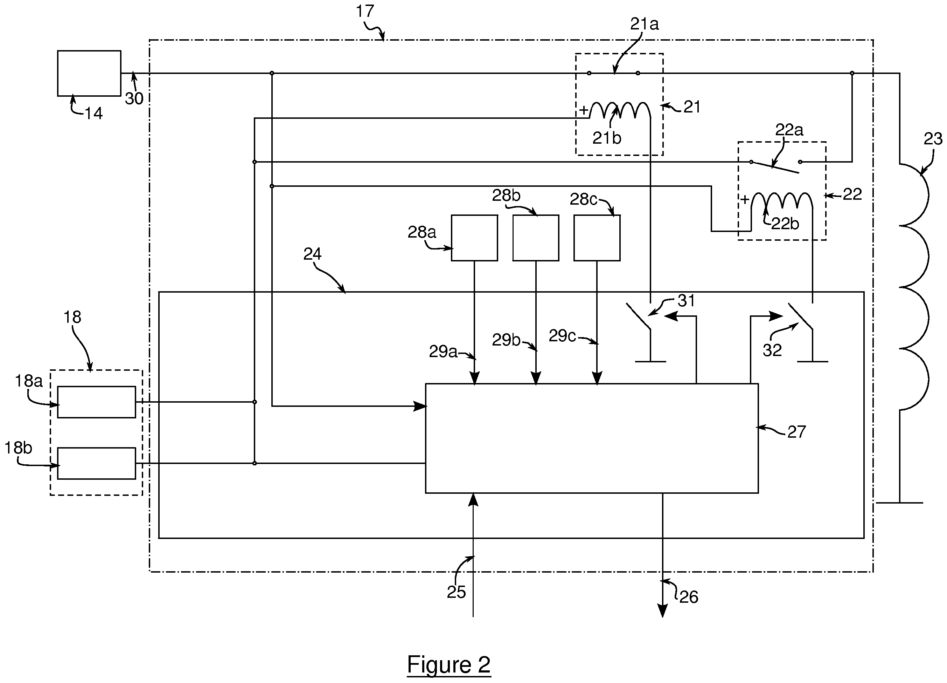

La figure 1 représente de façon schématique une architecture électrique d'un aéronef 10 comportant un système de génération électrique 11 et une architecture de distribution 12. Le système de génération électrique 11 contient un générateur 13 AC 115V ou 230V, un régulateur 14 et un contacteur 15 qui relie le générateur 13 à l'architecture de distribution 12. L'architecture de distribution 12 contient généralement une barre de distribution AC principale 16 et une barre de distribution DC alimenté par la barre principale par le biais d'un convertisseur AC/DC (non représentés). Un dispositif d'assistance 17 récupère un signal 30 destiné à la commande du contacteur 15 provenant du régulateur 14 et envoie un signal à la commande du contacteur 15. Le dispositif d'assistance 17 est alimenté par une source d'alimentation 18 qui peut apporter au système 11 le courant nécessaire à la fermeture du contacteur 15 grâce à des moyens de fermeture du contacteur, ci-après en référence à la figure 2. En effet, dans ce mode de réalisation, le régulateur 14 ne peut pas fournir le courant nécessaire à la fermeture du contacteur 15. Le régulateur 14 peut en revanche fournir le courant nécessaire pour maintenir fermé le contacteur 15. Le dispositif d'assistance 17 possède aussi des moyens de mesures 20 de tensions et de fréquence en un point proche d'un point de régulation 19 (POR) situé entre le générateur 13 et le contacteur 15, immédiatement en amont du contacteur 15.

La figure 2 représente de façon schématique un dispositif d'assistance 17 selon un mode de réalisation de l'invention. Le dispositif d'assistance 17 comprend une carte électronique 24, ainsi que des moyens de fermeture du contacteur 15. Ces moyens de fermetures du contacteur comprennent, dans ce mode de réalisation, deux relais. Chaque relais comprend des contacts et une bobine de commande d'ouverture/fermeture. Le premier relais 21 est un relais normalement fermé dont les contacts 21 a relient la commande 23 du contacteur 15 au régulateur 14, et dont la bobine de commande 21 b est reliée à la source d'alimentation 18. Le second relais 22 est un relais normalement ouvert dont les contacts 22a relient la commande 23 du contacteur 15 à la source d'alimentation 18, et dont la bobine de commande 22b est reliée au régulateur 14. Par commande 23 du contacteur 15, on entend ici la bobine qui reçoit le signal de commande pour fermer ou ouvrir le contacteur 15. Le contacteur 15 est un contacteur normalement ouvert, c'est-à-dire qu'il est ouvert en l'absence d'alimentation de sa bobine 23. Le dispositif 17 reçoit aussi un signal 25 donnant l'état du contacteur 15. Le dispositif 17 peut émettre en sortie un signal 26 au régulateur 14 pour demander la déconnexion du générateur 13. Le dispositif 17 est connecté à la source d'alimentation 18 qui alimente un circuit logique 27 de la carte électronique 24. Dans ce mode de réalisation, la source d'alimentation 18 est composée de deux sources 18a et 18b pour permettre une redondance.

Le dispositif 17 comprend des moyens de mesure de la tension 28a, 28b, 28c qui mesurent en permanence les trois tensions de phases du générateur 13, proches du POR 19. Le circuit logique 27 possède trois entrées 29a, 29b, 29c qui récupèrent ces mesures de tensions 28a, 28b, 28c.

Le dispositif d'assistance 17 intervient sur la commande 23 du contacteur 15 suivant un procédé d'assistance basé sur des connexions et déconnexions des différents éléments du système de génération électrique 11 et du dispositif d'assistance 17. Dans ce mode de réalisation, les relais 21 et 22 du dispositif d'assistance 17 permettent d'effectuer ces connexions et déconnexions selon plusieurs étapes.

Le procédé d'assistance pour fermer le contacteur 15 comprend successivement les étapes suivantes :
- ouverture du premier relais 21 pour déconnecter le régulateur 14 de la commande 23 du contacteur 15 ;
- fermeture du second relais 22 pour connecter la commande 23 du contacteur 15 à la source d'alimentation 18, afin d'alimenter la commande 23 avec le courant nécessaire à la fermeture de celui-ci ;

- fermeture du premier relais 21 pour connecter le régulateur 14 à la commande 23 du contacteur 15, afin que le régulateur 14 maintienne fermé le contacteur 15;
- ouverture du second relais 22, afin de déconnecter la commande 23 du contacteur 15 de la source d'alimentation 18, afin que le régulateur 14 garde le contrôle de l'ouverture du contacteur 15 sans perturbation par le dispositif d'assistance 17.

L'étape de connexion de la source d'alimentation 18 à la commande 23 du contacteur 15, pour apporter le courant nécessaire à la fermeture de celui-ci, s'effectue par la fermeture du second relais 22, dont la bobine de commande 22b est reliée au régulateur 14. Le second relais 22 étant normalement ouvert, le signal 30 de fermeture envoyé par le régulateur 14 est nécessaire à la fermeture du second relais 22 : le contacteur 15 n'est donc pas fermé en l'absence du signal 30 provenant du régulateur 14, celui-ci a ainsi le contrôle du pilotage du contacteur 15.

L'étape de connexion du régulateur 14 à la commande 23 du contacteur 15 s'effectue par la fermeture du premier relais 21, dont la bobine de commande 21 b est reliée à la source d'alimentation 18. Le premier relais 21 étant normalement fermé, cette étape ne s'effectue que dans le cas où le premier relais 21 est maintenu en position ouverte par l'alimentation de la bobine 21 b du premier relais 21 par la source d'alimentation 18. Ainsi, lorsque la source d'alimentation 18 cesse d'alimenter cette bobine 21 b, le premier relais 21 se referme. Si cette étape suit celle de connexion de la source d'alimentation 18 à la commande 23 du contacteur 15, elle permet donc de maintenir la fermeture du contacteur 15 en alimentant la commande 23 du contacteur 15 grâce au régulateur 14. Le régulateur 14 garde alors le contrôle du contacteur 15 et peut procéder à son ouverture si nécessaire (en cessant d'alimenter sa commande 23).

Ces étapes s'effectuent grâce à l'alimentation des bobines des relais par la source d'alimentation 18, pour le premier relais 21, et par le régulateur 14, pour le deuxième relais 22, ainsi que par deux interrupteurs SW1 31 (pour le premier relais 21) et SW2 32 (pour le second relais 22) du dispositif d'assistance 17 qui ferment ou ouvrent les circuits où se trouvent ces bobines 21 b et 22b.

Parallèlement à ce procédé en fonctionnement normal, le procédé comprend aussi des étapes de gestion de panne ou de dysfonctionnement électrique du générateur 13.

Une étape de gestion de dysfonctionnement électrique s'exécute si le générateur 13 détecte un dysfonctionnement électrique au niveau des 3 phases du POR 19. Le dispositif 17 ouvre alors les deux relais 21 et 22 pour déconnecter la commande 23 du contacteur 15 du régulateur 14 et de la source d'alimentation 18 afin de provoquer l'ouverture du contacteur 15 et donc la déconnexion du générateur 13 de l'architecture de distribution 12. Ces dysfonctionnements peuvent être une surtension, sous-tension, sur-fréquence, ou tout autre dysfonctionnement que peut détecter le dispositif d'assistance 17 grâce aux moyens de mesures de tensions et de fréquence 20 et qui nécessiterait la déconnexion du générateur 13 avec l'architecture de distribution 12. Cette fonction de protection vient en supplément d'une fonction de protection qu'assure déjà le régulateur 14. Cela permet d'améliorer la protection sans modifier le comportement du régulateur 14 et donc sans remettre en cause les certifications de celui-ci.

Une panne peut arriver si un des relais ne se comporte pas comme prévu selon les étapes du procédé, ou si le contacteur 15 ne se ferme pas à la suite de l'étape de fermeture du second relais 22.

Une étape de panne avec l'envoi d'un signal de déconnexion 26 au générateur 13 se déclenche dans les cas suivants :
- le premier relais 21 est « collé fermé », c'est-à-dire qu'il ne s'ouvre pas à la suite de l'étape d'ouverture du premier relais 21 : il faut déconnecter le générateur 13 car le dispositif d'assistance 17 ne peut plus assurer la protection contre les dysfonctionnements électriques.
- Le second relais 22 est « collé fermé », c'est-à-dire qu'il ne s'ouvre pas à la suite de l'étape d'ouverture du second relais 22 : il faut déconnecter le générateur 13 car le régulateur 14 ne peut plus ouvrir le contacteur 15.

Une étape de panne sans l'envoi d'un signal de déconnexion au générateur 13 se déclenche dans les cas suivants :
- le premier relais 21 est « collé ouvert », c'est-à-dire qu'il est ouvert avant l'étape d'ouverture du premier relais 21 : dans ce cas, le contacteur 15 est ouvert donc il n'y a pas nécessité de déconnecter le générateur 13, mais il est impossible d'exécuter le procédé en fonctionnement normal.
- Le second relais 22 est « collé ouvert », c'est-à-dire qu'il ne se ferme pas à la suite de l'étape de fermeture du second relais 22 : la source d'alimentation 18 ne peut pas être connectée à la commande 23 du contacteur 15, celui-ci ne peut donc pas être fermé, car le régulateur 14 n'a pas la capacité à le faire. Il n'y a donc pas nécessité de déconnecter le générateur 13, mais il est impossible d'exécuter le procédé en fonctionnement normal.
- Le contacteur 15 ne se ferme pas à la suite de l'étape de fermeture du second relais 22: Le contacteur 15 reste donc ouvert, donc il n'y a pas nécessité de déconnecter le générateur 13, mais il est impossible d'exécuter le procédé en fonctionnement normal.

Le dispositif 17 détecte quand les relais sont « collés ouverts » ou « collés fermés » grâce à des signaux de statuts (non représentés) des relais récupérés par le dispositif 17. De même, la récupération d'un signal de statut 25 du contacteur 15 par le dispositif 17 permet de contrôler si le contacteur 15 est bien ouvert ou fermé.

## Revendications

1. Dispositif d'assistance (17) d'un système de génération électrique (11) d'un aéronef, ledit système (11) comprenant un générateur (13), un régulateur (14) et un contacteur (15) comprenant des contacts et une commande (23) d'ouverture/fermeture des contacts, piloté par ledit régulateur (14) et agencé entre le générateur (13) et une architecture de distribution (12), le dispositif d'assistance (17) étant **caractérisé en ce qu'**il est connecté à au moins une source d'alimentation (18) distincte du générateur (13) et du régulateur (14), **en ce qu'**il comprend des moyens de fermeture du contacteur adaptés pour connecter la source d'alimentation (18) à la commande (23) du contacteur (15) après avoir déconnecté le régulateur de la commande du contacteur afin de fournir le courant nécessaire à la fermeture dudit contacteur (15), et **en ce que** les moyens de fermeture du contacteur comprennent un premier relais électrique (21) comprenant des contacts (21 a) et une commande (21 b) d'ouverture/fermeture des contacts (21 a), lesdits contacts (21 a) étant adaptés pour relier le régulateur (14) à la commande (23) du contacteur (15), lorsque le contacteur a commuté en position fermée, et la commande (21 b) dudit relais (21) étant reliée à la source d'alimentation (18).

2. Dispositif selon la revendication 1, **caractérisé en ce que** les moyens de fermeture du contacteur (15) comprennent un relais électrique (22), dit second relais, comprenant des contacts (22a) et une commande (22b) d'ouverture/fermeture des contacts(22a), lesdits contacts (22a) étant adaptés pour relier la source d'alimentation (18) à la commande (23) du contacteur (15) et la commande (22b) dudit second relais (22) étant reliée au régulateur (14).

3. Dispositif selon les revendications 1 et 2 prises ensemble, **caractérisé en ce que** le premier relais (21) est un relais normalement fermé et le second relais (22) est un relais normalement ouvert.

4. Dispositif selon l'une des revendications 1 à 3, **caractérisé en ce qu'**il comprend des moyens de mesure (20) de la tension et de la fréquence à proximité d'un point de régulation (19) situé entre le générateur (13) et le contacteur (15).

5. Procédé d'assistance d'un système de génération électrique (11) d'un aéronef comprenant un générateur (13), un régulateur (14) et un contacteur (15) comprenant des contacts et une commande (23) d'ouverture/fermeture des contacts, piloté par ledit régulateur (14) et agencé entre le générateur (13) et une architecture de distribution (12), **caractérisé en ce qu'**il comprend une étape de connexion de la commande (23) du contacteur (15) à au moins une source d'alimentation (18) distincte du générateur (13) et du régulateur (14) afin de fournir le courant nécessaire à la fermeture dudit contacteur (15) et **en ce qu'**il comprend successivement les étapes suivantes :
- une étape de déconnexion du régulateur (14) de la commande (23) du contacteur (15);
- ladite étape de connexion de la commande (23) du contacteur (15) à la source d'alimentation (18), afin de provoquer la fermeture dudit contacteur (15) ;
- une étape de connexion du régulateur (14) à la commande (23) du contacteur (15), afin de maintenir fermé le contacteur (15) ;
- une étape de déconnexion de la commande (23) du contacteur (15) de la source d'alimentation (18).

6. Procédé d'assistance selon la revendication 5, **caractérisé en ce qu'**il contient une étape de gestion de panne avec l'envoi d'un signal (26) de déconnexion au générateur (13), ladite étape étant exécutée quand le régulateur (14) et la commande (23) du contacteur (15) ne sont pas déconnectés suite à l'étape de déconnexion du régulateur (14) à la commande (23) du contacteur (15), ou quand la commande (23) du contacteur (15) et la source d'alimentation (18) ne sont pas déconnectés suite à l'étape de déconnexion de la commande (23) du contacteur (15) à la source d'alimentation (18).

7. Procédé d'assistance selon l'une quelconque des revendications 5 ou 6, **caractérisé en ce qu'**il contient une étape de gestion de panne sans envoi de signal de déconnexion au générateur (13), ladite étape étant exécutée quand le régulateur (14) et la commande (23) du contacteur (15) sont déconnectés avant l'étape de déconnexion du régulateur (14) à la commande (23) du contacteur (15), quand la commande (23) du contacteur (15) et la source d'alimentation (18) ne sont pas connectés suite à l'étape de connexion de la commande (23) du contacteur (15) à la source d'alimentation (18), ou quand le contacteur (15) ne se ferme pas à la suite de l'étape de connexion de la commande (23) du contacteur (15) à la source d'alimentation (18).

8. Procédé d'assistance selon la revendication 7, **caractérisé en ce que** ladite étape de gestion de panne sans envoi de signal de déconnexion au générateur (13) se déclenche après une temporisation prédéterminée quand le contacteur (15) ne se ferme pas à la suite de l'étape de connexion de la commande (23) du contacteur (15) à la source d'alimentation (18).

9. Procédé d'assistance selon l'une quelconque des revendications 5 à 8, **caractérisé en ce qu'**il contient une étape de gestion de dysfonctionnement électrique durant laquelle la commande (23) du contacteur (15) est déconnectée du régulateur (14) et de la source d'alimentation (18), ladite étape étant exécutée si le procédé d'assistance détecte un dysfonctionnement électrique grâce à des mesures de tensions sur un point de régulation (19) situé entre le générateur (13) et le contacteur (15).

## Patentansprüche

1. Unterstützungsvorrichtung (17) eines Elektrogeneratorsystems (11) eines Luftfahrzeugs, wobei das System (11) einen Generator (13), einen Regler (14) und einen Schütz (15) aufweist, das Kontakte und eine Steuerung (23) zum Öffnen/Schließen der Kontakte aufweist, das durch den Regler (14) gesteuert ist und zwischen dem Generator (13) und einer Verteilungsarchitektur (12) angeordnet ist, wobei die Unterstützungsvorrichtung (17) **dadurch gekennzeichnet ist, dass** sie an mindestens eine Stromquelle (18) angeschlossen ist, die von dem Generator (13) und dem Regler (14) getrennt ist, dass sie Mittel zum Schließen des Schützes aufweist, die geeignet sind, um die Stromquelle (18) an die Steuerung (23) des Schützes (15) anzuschließen, nachdem der Regler von der Steuerung des Schützes getrennt worden ist, um den Strom zuzuführen, der für das Schließen des Schützes (15) notwendig ist, und dass die Mittel zum Schließen des Schützes ein erstes elektrisches Relais (21) aufweisen, das Kontakte (21a) und eine Steuerung (21b) zum Öffnen/Schließen der Kontakte (21a) aufweist, wobei die Kontakte (21a) geeignet sind, um den Regler (14) mit der Steuerung (23) des Schützes (15) zu verbinden, wenn das Schütz in die geschlossene Position umgeschaltet worden ist, und wobei die Steuerung (21b) des Relais (21) mit der Stromquelle (18) verbunden ist.

2. Vorrichtung nach Anspruch 1, **dadurch gekennzeichnet, dass** die Mittel zum Schließen des Schützes (15) ein elektrisches Relais (22), das sogenannte zweite Relais, aufweisen, das Kontakte (22a) und eine Steuerung (22b) zum Öffnen/Schließen der Kontakte (22a) aufweist, wobei die Kontakte (22a) geeignet sind, um die Stromquelle (18) an die Steuerung (23) des Schützes (15) anzuschließen, und wobei die Steuerung (22b) des zweiten Relais (22) mit dem Regler (14) verbunden ist.

3. Vorrichtung nach den Ansprüchen 1 und 2 zusammengenommen , **dadurch gekennzeichnet, dass** das erste Relais (21) ein normalerweise geschlossenes Relais ist und das zweite Relais (22) ein normalerweise offenes Relais ist.

4. Vorrichtung nach einem der Ansprüche 1 bis 3, **dadurch gekennzeichnet, dass** sie Mitteln zum Messen (20) der Spannung und der Frequenz in der Nähe eines Regulierungspunktes (19) aufweist, der zwischen dem Generator (13) und dem Schütz (15) angeordnet ist.

5. Unterstützungsverfahren eines Elektrogeneratorsystems (11) eines Luftfahrzeugs, umfassend einen Generator (13), einen Regler (14) und einen Schütz (15), das Kontakte und eine Steuerung (23) zum Öffnen/Schließen der Kontakte aufweist, das durch den Regler (14) gesteuert wird und zwischen dem Generator (13) und einer Verteilungsarchitektur (12) angeordnet wird, **dadurch gekennzeichnet, dass** es einen Schritt des Anschließens der Steuerung (23) des Schützes (15) an mindestens eine Stromquelle (18) aufweist, die von dem Generator (13) und von dem Regler (14) getrennt ist, um den Strom zuzuführen, der für das Schließen des Schützes (15) notwendig ist, und dass es die folgenden Schritte aufweist:
- einen Schritt des Trennens des Reglers (14) von der Steuerung (23) des Schützes (15);
- den Schritt des Anschließens der Steuerung (23) des Schützes (15) an die Stromquelle (18), um das Schließen des Schützes (15) zu bewirken;
- einen Schritt des Anschließens des Reglers (14) an die Steuerung (23) des Schützes (15), um das Schütz (15) geschlossen zu halten;
- einen Schritt des Trennens der Steuerung (23) des Schützes (15) von der Stromquelle (18).

6. Unterstützungsverfahren nach Anspruch 5, **dadurch gekennzeichnet, dass** es einen Schritt der Fehlerverwaltung mit dem Senden eines Trennungssignals (26) an den Generator (13) enthält, wobei der Schritt ausgeführt wird, wenn der Regler (14) und die Steuerung (23) des Schützes (15) infolge des Schrittes des Trennens des Reglers (14) an der Steuerung (23) des Schützes (15) nicht getrennt werden, oder wenn die Steuerung (23) des Schützes (15) und die Stromquelle (18) infolge des Schrittes des Trennens der Steuerung (23) des Schützes (15) an der Stromquelle (18) nicht getrennt werden.

7. Unterstützungsverfahren nach einem der Ansprüche 5 oder 6, **dadurch gekennzeichnet, dass** es einen Schritt der Fehlerverwaltung ohne Senden eines Trennungssignals an den Generator (13) enthält, wobei der Schritt ausgeführt wird, wenn der Regler (14) und die Steuerung (23) des Schützes (15) vor dem Schritt des Trennens des Reglers (14) an der Steuerung (23) des Schützes (15) getrennt werden, wenn die Steuerung (23) des Schützes (15) und die Stromquelle (18) infolge des Schrittes des Anschließens der Steuerung (23) des Schützes (15) an die Stromquelle (18) nicht angeschlossen werden, oder wenn sich das Schütz (15) nach dem Schritt des Anschließens der Steuerung (23) des Schützes (15) an die Stromquelle (18) nicht schließt.

8. Unterstützungsverfahren nach Anspruch 7, **dadurch gekennzeichnet, dass** der Schritt der Fehlerverwaltung ohne Senden eines Trennungssignals an den Generator (13) nach einer vorbestimmten Verzögerung ausgelöst wird, wenn sich das Schütz (15) nach dem Schritt des Anschließens der Steuerung (23) des Schützes (15) an die Stromquelle (18) nicht schließt.

9. Unterstützungsverfahren nach einem der Ansprüche 5 bis 8, **dadurch gekennzeichnet, dass** es einen Schritt der Verwaltung einer elektrischen Fehlfunktion enthält, bei dem die Steuerung (23) des Schützes (15) von dem Regler (14) und der Stromquelle (18) getrennt wird, wobei der Schritt durchgeführt wird, wenn das Unterstützungsverfahren durch Spannungsmessungen an einem Regulierungspunkt (19), der zwischen dem Generator (13) und dem Schütz (15) angeordnet ist, eine elektrischen Fehlfunktion erkennt.

## Claims

1. Assistance device (17) for an electrical power generation system (11) of an aircraft, said system (11) comprising a generator (13), a regulator (14) and a contactor (15) comprising contacts and an actuator (23) for opening/closing the contacts which is controlled by said regulator (14) and arranged between the generator (13) and a distribution architecture (12), the assistance device (17) being **characterised in that** it is connected to at least one power source (18) which is separate from the generator (13) and the regulator (14), and **in that** it comprises means for closing the contactor which are suitable for connecting the power source (18) to the actuator (23) of the contactor (15) after having disconnected the regulator from the actuator of the contactor in order to provide the current necessary for closing said contactor (15), and **in that** the means for closing the contactor comprise a first electric relay (21) comprising contacts (21 a) and an actuator (21 b) for opening/closing the contacts (21 a), said contacts (21 a) being suitable for connecting the regulator (14) to the actuator (23) of the contactor (15) when the contactor switched to closed position, and the actuator (21 b) of said relay (21) being connected to the power source (18).

2. Device according to claim 1, **characterised in that** the means for closing the contactor (15) comprise an electric relay (22), referred to as a second relay, comprising contacts (22a) and an actuator (22b) for opening/closing the contacts (22a), said contacts (22a) being suitable for connecting the power source (18) to the actuator (23) of the contactor (15), and the actuator (22b) of said second relay (22) being connected to the regulator (14).

3. Device according to claims 1 and 2 in combination, **characterised in that** the first relay (21) is a normally closed relay and the second relay (22) is a normally open relay.

4. Device according to any of claims 1 to 3, **characterised in that** it comprises means (20) for measuring the voltage and the frequency close to a point of regulation (19) located between the generator (13) and the contactor (15).

5. Assistance method for an electrical power generation system (11) of an aircraft, comprising a generator (13), a regulator (14) and a contactor (15) comprising contacts and an actuator (23) for opening/closing the contacts which is controlled by said regulator (14) and arranged between the generator (13) and a distribution architecture (12), **characterised in that** it comprises a step of connecting the actuator (23) of the contactor (15) to at least one power source (18) which is separate from the generator (13) and the regulator (14) in order to provide the current necessary for closing said contactor (15) and it that it comprises the following steps, successively:
- a step of disconnecting the regulator (14) from the actuator (23) of the contactor (15);
- said step of connecting the actuator (23) of the contactor (15) to the power source (18) in order to cause the closure of said contactor (15);
- a step of connecting the regulator (14) to the actuator (23) of the contactor (15) in order to keep the contactor (15) closed;
- a step of disconnecting the actuator (23) of the contactor (15) from the power source (18).

6. Assistance method according to claim 5, **characterised in that** it comprises a step of failure management involving sending a disconnection signal (26) to the generator (13), said step being carried out when the regulator (14) and the actuator (23) of the contactor (15) are not disconnected following the step of disconnecting the regulator (14) from the actuator (23) of the contactor (15), or when the actuator (23) of the contactor (15) and the power source (18) are not disconnected following the step of disconnecting the actuator (23) of the contactor (15) from the power source (18).

7. Assistance method according to any of claims 5 or 6, **characterised in that** it comprises a step of failure management without sending a disconnection signal to the generator (13), said step being carried out when the regulator (14) and the actuator (23) of the contactor (15) are disconnected prior to the step of disconnecting the regulator (14) from the actuator (23) of the contactor (15), when the actuator (23) of the contactor (15) and the power source (18) are not connected following the step of connecting the actuator (23) of the contactor (15) to the power source (18), or when the contactor (15) does not close following the step of connecting the actuator (23) of the contactor (15) to the power source (18).

8. Assistance method according to claim 7, **characterised in that** said step of failure management without sending a disconnection signal to the generator (13) is triggered after a predetermined time when the contactor (15) does not close following the step of connecting the actuator (23) of the contactor (15) to the power source (18).

9. Assistance method according to any of claims 5 to 8, **characterised in that** it comprises a step of electrical malfunction management during which the actuator (23) of the contactor (15) is disconnected from the regulator (14) and from the power source (18), said step being carried out if the assistance method detects an electrical malfunction by means of voltage measurements at a point of regulation (19) located between the generator (13) and the contactor (15).
